# EUROPEAN PATENT SPECIFICATION

(11) **EP 2 198 689 B1**
(45) Date of publication and mention of the grant of the patent: **31.10.2012**
(21) Application number: 09179713.4
(22) Date of filing: 17.12.2009
(51) Int. Cl.: A01G 1/00, A01G 31/00, A01G 9/10

(54) **Plant supporting mat**
Pflanzenstützmatte
Tapis de support pour plantes

(30) Priority: 18.12.2008 IT BO20080758
(43) Date of publication of application: 23.06.2010
(73) Proprietor: Frapoli, Stefano, Faenza (IT)
(72) Inventor: Frapoli, Stefano, Faenza (IT)
(74) Representative: Jorio, Paolo

(56) References cited:
- EP-A1- 0 504 762
- DE-A1-102005 063 133
- DE-U- 29 918 940
- US-A1- 2007 062 113

## Description

The present invention relates to a plant supporting mat in particular for installation on vertical walls or on walls set at a slope with respect to a horizontal plane.

Mats used to cover vertical or sloping walls and which act as a base to support plants are known in the prior art. For example, the patent application DE-A1-102005063133 and the utility model DE-U-29918940 disclose plant supporting mats comprising a plurality of different chambers containing a mixture of substances for feeding the plant roots. In particular, the mixture of substances for feeding the plant roots contains substances such as perlite, pumice, etc. which the plants need in order to grow.

The main inconvenience of such mats is that the material contained in the mat gradually slips towards the bottom so that the plants arranged on the highest part of the walls are deprived of food. This results in uneven growth of the plants and clearly has a negative impact on the aesthetic appearance of the wall. Such slipping of said material towards the bottom of the wall is accentuated by irrigation and rainwater. The water used to water the plants and/or rainwater also tends to run down to the bottom, which means watering is also performed unevenly: the plants arranged on the highest part of the wall receive less water and those at the bottom receive too much.

The purpose of the present invention is to provide a plant supporting mat that overcomes the drawbacks described above.

According to the present invention as claimed in claim 1, there is provided a plant supporting mat **characterized in that** it comprises a plurality of different chambers containing a mixture for feeding the plant roots.

The present invention will now be described with reference to the accompanying drawings, illustrating a preferred embodiment thereof, in which:
figure 1 is a perspective view of a plant supporting mat in use;
figure 2 is a perspective view from a different angle with respect to the mat in figure 1; and
figure 3 is a cross-sectional view of the mat of figure 1.

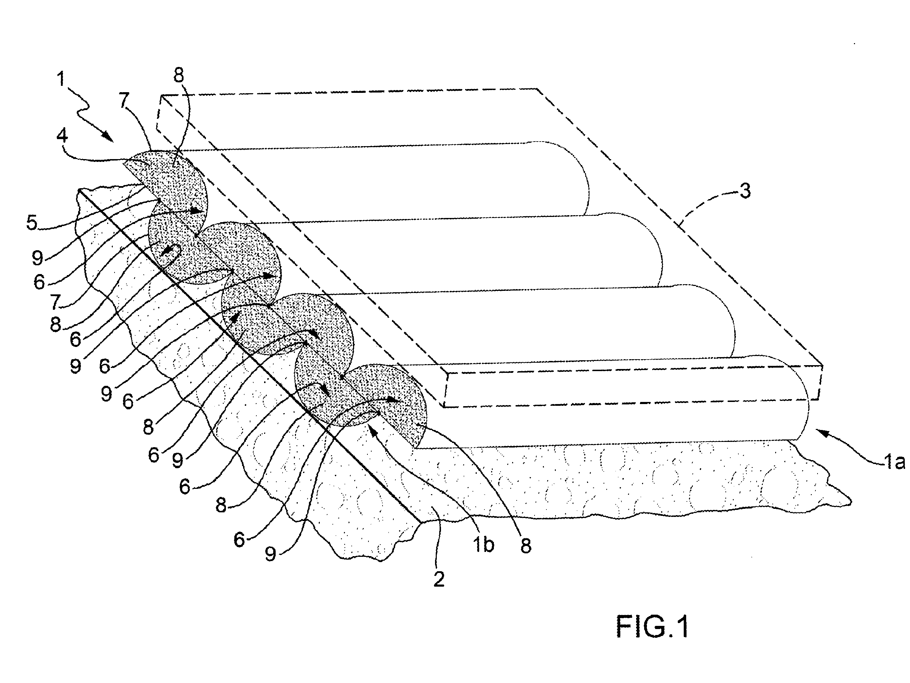

With reference to figure 1, designated as a whole by number 1 is a plant supporting mat (the plants are not illustrated for the sake of simplicity). The mat 1 is used to cover a wall 2 which may be substantially vertical or set at a slope with respect to a horizontal plane. In use a second mat 3 (illustrated by the broken line) preferably made of pre-vegetated coconut fibre or kenaf, is laid on top of the mat. In use the roots of the plants extend into the mat and feed on the base of the material 4 contained in the mat 1.

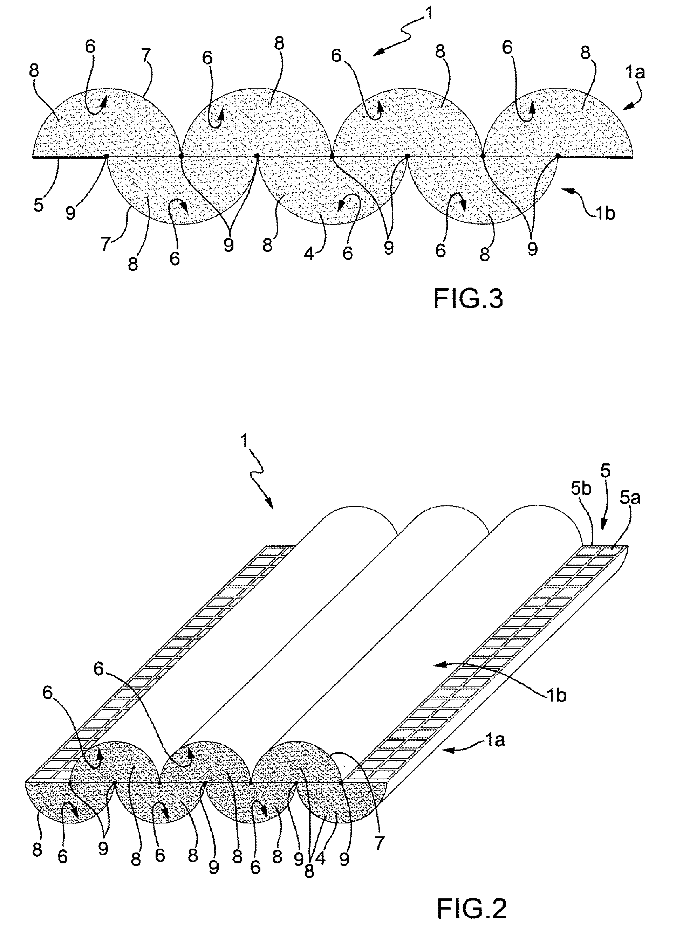

With reference to figures 1, 2 and 3, the mat 1 is divided into two parts 1a and 1b between which there is arranged a layer 5 of geocompound made of continuous filament, polyester, non-woven fabric and defined by a reticular film 5a and by a reticular film 5b; the films 5a and 5b being heat-welded to one another. Each part 1a and 1b of the mat 1 consists of a plurality of inner chambers 6 having a semi-circular cross-section. Each chamber 6 is delimited on one side by the layer 5 which is defined on a plane and on the opposite side by a portion of a coating 7, said portion having a cross-section that substantially describes an arc of a circle. In use seams 9 are formed, using nylon thread, between the coating 7 and the layer 5 along several parallel lines in order to form a plurality of chambers 6 of the type described. The coating 7 is made of a continuous filament non-woven fabric based on polypropylene coupled to a high-tenacity polyester, multifilament fabric. Each chamber 6 contains a predefined amount of a mixture 8 containing perlite, volcanic rocks, zeolite, leonardite, water retention polymer and slow-release fertilizer.

With reference to figures 1, 2 and 3, the two parts 1a and 1b or rather the chambers 6 of said parts 1a and 1b are staggered with respect to one another by half a width of the chamber 6. Moreover the mat 1 is arranged on the wall 2 in such a way that the reticular film 5b is facing said wall 2. In the accompanying figures the seams closing the chambers 6 along their longitudinal axes are not shown; said seams are sewn between the side edges of the coatings 7 of the two parts 1a and 1b using nylon thread. The reticular film 5b simply provides the means for attaching the mat 1 to the wall 2. It suffices to provide the wall 2 with a wire for example a metal wire or with hooks or with projections of any kind which can then be used to fix the reticular film 5b and thus the mat 1 to the wall 2.

The advantages of the present invention are apparent from the above description.

In particular the mat 1 that is provided has a plurality of different chambers 6 arranged with their longitudinal axes arranged horizontally and thus perpendicular to the axis of inclination of the wall 2. In this way the material 8 contained in the chambers 6 is withheld within said chambers 6 so that the mat retains the same thickness even over time with all the relative advantages for the plants, which all receive the same amount of food and thus grow uniformly. Moreover irrigation is improved in that the water is not channelled rapidly downwards. Nature does the rest, as the roots of the plants gradually penetrate the mat 1 and reach the food. Lastly it is important to note that the reticular film 5b allows the mat to be fixed to the wall 2 simply and effectively in such a way that the entire mat 1 is prevented from slipping downwards.

Lastly, it is clear that modifications and variations may be made to the mat 1 described and illustrated herein without departing from the scope of the present invention as defined in the appended claims.

## Claims

1. Plant supporting mat comprising a plurality of different chambers (6) containing a mixture (8) for feeding the plant roots; said chambers (6) are parallel to each other; the plant supporting mat is **characterized in that** each of said chambers (6) is limited, on one side, by a coating (7) of a geocompound made of a continuous filament non-woven fabric based on polypropylene coupled to a high-tenacity polyester, multifilament fabric and, on the other side, by a layer (5) of geocompound made of continuous filament, polyester, non-woven fabric; the said layer (5) is defined by a first reticular film (5a) and by a second reticular film (5b), the latter constituting a means of fastening to a wall (2).

2. Mat according to Claim 1, **characterized in that** said mixture (8) is formed by perlite, volcanic rocks, zeolitic rocks, leonardite, water retention polymer and slow-release fertilizer.

3. Mat according to Claim 1 or 2, **characterized in that** between said coating (7) and said layer (5) seams (9) are carried out, preferably by means of a nylon thread, along several parallel lines in order to form said plurality of chambers (6).

4. Mat according to any one of the previous Claims, **characterized in that** it comprises two parts (1a and 1b) between which there is arranged said layer (5); each of said parts (1a and 1b) being provided with a plurality of said chambers (6).

5. Mat according to Claim 4 **characterized in that** said chambers (6) of a first said part (1a) are staggered with respect to said chambers (6) of said second part (1b) preferably by half a width of one said chamber (6).

## Patentansprüche

1. Pflanzenstützunterlage umfassend eine Mehrzahl unterschiedlicher Kammern (6), welche eine Mischung (8) zum Ernähren der Pflanzenwurzeln enthalten; wobei die Kammern (6) parallel zueinander sind; wobei die Pflanzenstützunterlage **dadurch gekennzeichnet ist, dass** jede der Kammern (6) auf einer Seite durch eine Beschichtung (7) eines Geogemisches, welches aus fortlaufenden Filamenten eines Vliesstoffes auf Basis von Polypropylen gekoppelt an ein hoch zugfesten Polyester-Multifilamentstoff hergestellt ist, und auf der anderen Seite durch eine Schicht (5) eines Geogemisches, welche aus einem fortlaufenden Filament-Polyester-Vliesstoff hergestellt ist, begrenzt ist; wobei die Schicht (5) durch einen ersten retikulären Film (5a) und durch einen zweiten retikulären Film (5b) definiert ist, wobei der letztere ein Mittel zum Befestigen an einer Wand (2) bildet.

2. Unterlage nach Anspruch 1, **dadurch gekennzeichnet, dass** die Mischung (8) durch Perlit, Vulkangesteine, zeolithische Gesteine, Leonardit, Wasserretentionspolymere und langsam werdende Düngemittel gebildet ist.

3. Unterlage nach Anspruch 1 oder 2, **dadurch gekennzeichnet, dass** zwischen der Beschichtung (7) und der Schicht (5) Nähte (9) ausgeführt sind, vorzugsweise mittels eines Nylonfadens, längs mehrerer paralleler Linien, um die Mehrzahl der Kammern (6) zu bilden.

4. Unterlage nach einem der voranstehenden Ansprüche, **dadurch gekennzeichnet, dass** sie zwei Teile (1a und 1b) umfasst, zwischen denen die Schicht (5) angeordnet ist; wobei jedes der Teile (1a und 1b) mit einer Mehrzahl der Kammern (6) ausgestattet ist.

5. Unterlage nach Anspruch 4, **dadurch gekennzeichnet, dass** die Kammern (6) eines ersten Teils (1a) bezogen auf die Kammern (6) des zweiten Teils (1b) versetzt sind, vorzugsweise um eine halbe Breite einer solchen Kammer (6).

## Revendications

1. Tapis de support pour plantes comprenant une pluralité de chambres différentes (6) contenant un mélange (8) pour l'alimentation des racines de plantes ; lesdites chambres (6) étant parallèles l'une à l'autre, le tapis de support pour plantes étant **caractérisé en ce que** chacune desdites chambres (6) est limitée, d'un côté, par un revêtement (7) d'un géocomposite fabriqué en un non-tissé de fibres continues à base de polypropylène associé à un tissu multifibre en polyester de haute ténacité et, de l'autre côté, par une couche (5) de géocomposite fabriqué en un non-tissé de polyester de fibres continues ; ladite couche (5) étant définie par un premier film réticulaire (5a) et par un second film réticulaire (5b), ce dernier constituant un moyen de fixation à une paroi (2).

2. Tapis selon la revendication 1, **caractérisé en ce que** ledit mélange (8) est formé par de la perlite, des roches volcaniques, des roches zéolithiques, de la léonardite, un polymère rétenteur d'eau et un fertiliseur à libération lente.

3. Tapis selon la revendication 1 ou 2, **caractérisé en ce que** des coutures (9) sont réalisées entre ledit revêtement (7) et ladite couche (5), de préférence à l'aide d'un fil de nylon, le long de plusieurs lignes parallèles, afin de former ladite pluralité de chambres (6).

4. Tapis selon l'une quelconque des revendications précédentes, **caractérisé en ce qu'**il comprend deux parties (1a et 1b) entre lesquelles est disposée ladite couche (5) ; chacune desdites parties (1a et 1b) étant dotée d'une pluralité de dites chambres (6).

5. Tapis selon la revendication 4, **caractérisé en ce que** lesdites chambres (6) d'une dite première partie (1a) sont échelonnées par rapport auxdites chambres (6) de la dite seconde partie (1b) de préférence selon la moitié de la largeur d'une dite chambre (6).
